# EUROPEAN PATENT APPLICATION

(11) **EP 4 047 054 A1**
(43) Date of publication of application: **24.08.2022**
(21) Application number: 22398003.8
(22) Date of filing: 18.01.2022
(51) Int. Cl.: C08L 27/06, C08L 101/00, C08K 3/04, C08L 75/04, C08L 67/00, C08K 3/26

(54) **LEATHER, POLYMER AND GRAPHENE-BASED NANOCOMPOSITE COMPOUND**

(30) Priority: 18.02.2021 PT 2021117073
(71) Applicant: Thorn Assets, LDA, 4400-135 Vila Nova de Gaia (PT)
(72) Inventor: Viana, Octávio Adolfo Romão, Vila Nova de Gaia (PT); Sandri, Enrico, Vicenza (IT); Sandri, Federica, Ferrara (IT); Viana, Maria João Romão, Vila Nova de Gaia (PT)

(57) **Abstract**

This invention relates to a process for obtaining a leather, polymer and graphene-based nanocomposite compound oxide which comprises adding between 0.25% to 10% (mass by mass) of graphene oxide (1), between 40% and 80% (mass by mass) of leather (2), 10% to 60% (mass by mass) of polymers (3) and between 0.01% to 45% (mass by mass) of calcium carbonate (4) by means of extrusion in an extruder(5) in which graphene oxide (1), polymers (3) and calcium carbonate (4) are melted and dispersed homogeneously in the leather(2).

This compound is used in the manufacture of packaging, cups, shoe soles, tires, carpets and car parts, giving these parts greater impermeability to water vapor and gases, better performance in terms of traction force, impact force and hardness and better heat dispersion.

## Description

### Invention field

Polymers, whether biologically or fossil-based, are used in the manufacture of packaging, bottles, car parts, pipes, bags, soles, carpets and other plastic products. These polymers can be biodegradable and compostable or not.

### Graphite is a carbon.

Graphene is a two-dimensional crystalline form of carbon, characterized by a sheet of carbon atoms with the thickness of a single atom with covalent bonds and arranged in a hexagonal shape that tends to be a stronger bond than other types of bonds. Graphene is extracted from graphite.

Graphene oxide is a layered material produced due to a particular oxidation process of graphite, which makes it a highly oxygenated and hydrophilic material.

Then there are the nanocomposites, made up of the aforementioned graphene.

Leather, when natural, is produced from animal skin tanning or, when synthetic, in general, it comprises a mixture of 70% polyvinyl chloride, 25% polyester and 5% polyurethane. For the purposes of the present invention, when referring to leather, it may be referring either to natural leather or to synthetic leather, according to the above formulation. The difference between the two, namely the fact that synthetic leather is mostly made of polyvinyl chloride, justifies the wide range of percentage values in the composition of the compound present in this invention, both in leather and in polymers, which include polyvinyl chloride.

Hot extrusion is a mechanical process that consists of forcing a billet through a shaped die opening, heated by means of a heater, at a temperature for recrystallization of the material by melting and casting it. The extrusion process takes place in an extruder (5).

This invention refers to a leather, polymer and graphene-based nanocomposite compound, which allows its use, namely, but not exclusively, in the manufacture of packaging, cups, shoe soles, tires, carpets, building insulation, car parts, synthetic turf infill, and decoration parts, giving these parts greater impermeability to water vapor and gases, which makes it possible to use less product for the same results and avoid the application of layers of aluminum film or others in the material lamination, in order to reduce permeability to gases and water vapor, with the consequent reduction in costs. It also has better antibacterial performance and better performance in terms of traction force, impact force and hardness, as well as better heat dispersion.

This invention comprises adding between 0.25% to 10% (mass by mass) of graphene oxide (1), between 40% and 80% (mass by mass) of leather (2), 10% to 60% (mass by mass) of polymers (3) and between 0.01% to 45% (mass by mass) of calcium carbonate (4) by means of extrusion in an extruder(5) in which graphene oxide (1), polymers (3) and calcium carbonate (4) are melted and dispersed homogeneously in the leather(2).

The following can also be added to the process: graphene, graphite or other graphene-based nanocomposites, replacing all or part of graphene oxide (1); paper, glass, glass wool or other form of cellulose between 5% and 75% (mass by mass) of leather (2); vulcanized rubber and replacing all or part of the leather (2); black carbon between 0.01% to 45% (mass by mass); ethylene vinyl acetate between 0.01% and 99% (mass by mass) of leather (2) or in its total replacement can also be added.

Although it is not evident, even to a technician or specialist in extrusion processes, the addition of more than 10% graphene oxide to the compound of polyethylene terephthalate and/or polyvinyl chloride, leather and calcium carbonate during the process of extrusion increases viscosity, making the extrusion process impossible (and good dispersion of graphene oxide in the compound is impossible because graphene oxide tends to re-agglomerate during the extrusion process when the amount of graphene or graphene oxide used is above 10% mass by mass, resulting in a product with flaws and worse impermeability); the amount of graphene oxide (1) to add to the compound is one of the biggest challenges facing while discovering this invention.

There is, however, evidence that the use of more than 15% mass by mass of graphene oxide or graphene contradicts the so-called re-agglomeration, but without significant gains compared to quantities between 0.25% to 10% and with a disproportionate increase in costs.

Likewise, the ratio between the leather and the other additional components, or those given in its replacement, and thermoplastic polymers and calcium carbonate is not evident, as it is decisive that, mainly in conjunction with graphene oxide or other nanocomposites consisting of graphene, that leather is added in a percentage range between 40 and 80% (mass by mass), in order to ensure that melting is possible, especially considering that it can be natural leather, synthetic leather or a mixture from both.

### State of the art

There are also several products, such as packaging, cups, napkins, plates, cutlery, bags, hammocks, shoe soles, building insulation, tires, carpets, car parts and decorative pieces made with various polymers, and others still in paper, including paper laminated with polyethylene terephthalate, but all of them exhibit lower impermeability, lower tensile strength, lower impact strength and lower damping capacity than this invention.

We can also find plastic bottles or packaging already with graphene, but also produced resorting to a technique that uses a layer of graphene film (see, as an example, the patents US 20130236715 A1, published on September 12, 2013, EP 2489520 A2, published on August 22, 2012, WO 2013004718 A1, published on January 10, 2013), or by different compression, absorption and/or injection techniques instead of melting by means of an extrusion technique as shown (see, as an example, WO 2012151433 A2, published on November 8, 2012, CN 102795619 A, published on November 28, 2012). There is also another type of technique, which uses heat (but not through an extrusion technique) and with the aim of producing a modified graphene-ethylene terephthalate material that can later allow the production of a film with these characteristics (see if, as an example, patent CN 103044865 A, published on April 17, 2013).

The closest inventions to this invention are Portuguese invention patents 107398 and 116924, owned by Thorn Assets, Lda, the applicant here.

Regarding the use of leather, natural or synthetic, together with polyvinyl chloride or other thermoplastic polymer and any graphene-based nanocomposites, no invention or publication leading to this invention is known, much less with a view to increasing waterproofing and resistance of the final product produced. Nor are other publications or patents known, which, when combined, enable an expert to discover this invention.

When compared with the average of composites that only carry polyethylene terephthalate and/or polyvinyl chloride with leather, for example, the synthetic leather itself, the product obtained through the technique of this invention, presents a superior structural homogeneity between 100% and approximately 900%, and superiority between 50% and 1500% in terms of thermoplastic properties, namely in terms of rigidity, thermostability, photostability and gas and water vapor barrier at the level presented here.

Furthermore, comparing the composite obtained through the invented process with the average of leather products coated with polyethylene or polylactic acid, or with polyvinyl chloride, produced by other processes that in no way resemble the process invented and described here, the product obtained by means of this invention's technique presents excellent antibacterial performance due to the two-dimensional structure of graphene, which makes the constructed composite highly impermeable to gases and water, in superiority between 10 and 150%. When used, for example, in shoe soles, it increases grip by approximately 400% compared to leather, and 40% compared to ethylene-vinyl acetate foam.

Everything combined allows us to conclude that the quality of the product obtained through this invention is much higher than the average quality of competing pieces that comprise leather in its various forms and thermoplastic polymers. The ratio between leather and thermoplastic polymer is between 40% and 80% (mass by mass), the addition of graphene and/or graphite and/or graphene-based nanocomposites between 0.25% and 5.10% (mass by mass) contributes to this superiority.

Finally, it should be noted that the product is obtained through an extrusion process and not through melting and subsequent compression, which would be different from extrusion.

Most polymers, such as polyethylene terephthalate, have a melting point above 250°C. The addition of graphene-based nanocomposites allows the melting point of the entire compound to be reached more quickly in an extrusion process, due to the high thermal conductivity of graphene. It also allows thermoplastic polymers to melt 10% below, on average, their known melting point, which makes it possible to avoid compromising the leather and/or paper.

It could be said that this invention does not present an inventive step when Portuguese patent 107398 is combined with other documents made public and which reveal the use of leather for the same purposes. However, it would be very difficult for experts in this area to adapt the current processes and leather products, generally from riverbanks and tanneries, in order to introduce the leather in the process described in Portuguese patent 107398. This is because, to achieve the process and the respective product, they would have to be able to understand that they could not add more than 80% (mass by mass) of leather, because, unlike thermoplastic polymers, leather does not melt and, therefore, does not allow the same dispersion as graphene oxide or of graphene-based nanocomposites, as in polymers.

For example, the use of more than 80% (mass by mass) of leather results in an agglomeration of graphene oxide or of graphene-based nanocomposites in polymers, leading to a very poor dispersion and, consequently, in a loss of performance, namely, but not exclusively, in terms of permeability to gases and water vapor. In an oxygen transfer test to a package made of 85% leather, polyethylene terephthalate and 1% graphene oxide by mass, according to the invented process, the values obtained are identical to those achieved without the incorporation of graphene oxide.

The use of less than 40% (mass per mass) of leather removes from the product obtained by this process the main characteristics obtained by using leather, namely in terms of lightness, elasticity and thermal, acoustic and anti-vibration insulation. As an example, the use of 30% (mass per mass) of leather increases the weight of the product (for the same volume) by 1.08 times more when compared to *ceteris paribus,* with 40% (mass per mass) of leather.

Also in economic terms, the use of leather (namely leather waste from the footwear industry) allows the cost of the final product to be reduced, so that the optimal values considering the various applications and the cost are between 40% and 75 % (mass by mass) of leather.

Finally, calcium carbonate is introduced in this process, which in addition to reducing the cost of the final product, is a source of calcium that melts well at high temperature and provides greater hardness and durability, especially for use, according to the process invented here, in construction industry, namely for insulation, coatings, fillings and floors.

### Detailed description of the invention

This invention sets up a process for obtaining a leather, polymer and graphene-based nanocomposite compound, which comprises adding between 0.25% to 10% (mass by mass) of graphene oxide (1), between 40% and 80% (mass by mass) of leather (2), 10% to 60% (mass by mass) of thermoplastic polymers (3) and between 0.01% to 45% (mass by mass) of calcium carbonate (4) by extrusion in an extruder(5) in which graphene oxide (1), thermoplastic polymers (3) and calcium carbonate (4) are homogeneously melted and dispersed in the leather (2), adding between 0.25% to 5.25% (mass by mass) of graphene oxide (1) and between 40% and 75% (mass by mass) of leather (2) to thermoplastic polymers (3) by means of extrusion in an extruder(5), in which graphene oxide (1) and thermoplastic polymers (3) are melted and dispersed homogeneously in the leather (2).

Graphene, graphite or other graphene-based nanocomposites can also be added to replace all or part of the graphene oxide (1);paper, glass, glass wool or other form of cellulose may be added between 5% and 75% (mass by mass) of leather (2); vulcanized rubber can also be added, and, in replacement of all or part of the leather (2), it can also be carbon black between 0.01% to 45% (mass by mass).

This invention will now be explained in more detail with the aid of the attached drawings, in which:

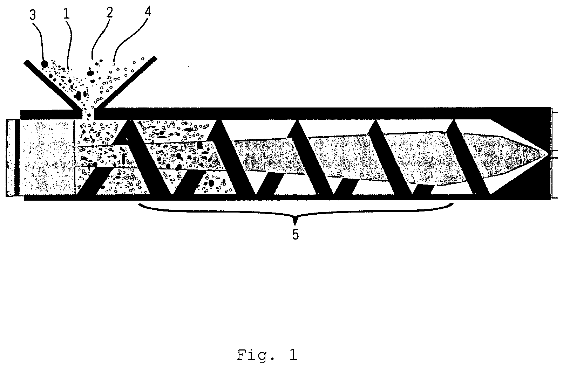

- Figure 1 is shown in a vertical longitudinal sectional plane, where the entire extrusion process in an extruder (5) is observed, where graphene oxide 1), leather (2), polymers (3) and calcium carbonate (4) mix and fuse as homogeneously as possible, forming a so-called leather, polymer and graphene-based nanocomposite compound.

Referring to figure 1, it is generically represented, and in a vertical longitudinal section, the whole extrusion process mentioned, in which graphene oxide (1), leather (2), ground or granulated polymers (3) and calcium carbonate (4) are inserted into an extruder (5). They can be inserted together, through a central feeder, or inserted separately, through one or more side feeders placed along the extruder(5) .

Preferably, a double billet with three sections should be used, with the central section being prepared for mixing nanocomposites.

In view of the stated above and to figure 1, between 0.25% and 10% (mass by mass) of graphene oxide (1, between 40% and 80% of leather (mass by mass) (5), 10% to 60% of polymers (3) and between 0.01% and 45% (mass by mass) of calcium carbonate(4) are placed in the extruder. These elements, through a normal and known extrusion process, using a single billet or a double billet, mix and cast, due to graphene oxide (1) and polymer(3) melting.

During the extrusion process, graphene, graphite or other graphene-based nanocomposites can be added, replacing all or part of graphene oxide (1); paper, glass, glass wool or other form of cellulose may be added between 5% and 75% (mass by mass) of leather (2); vulcanized rubber can also be added in place of all or part of the leather (2); it can also be black carbon between 0.01% to 45% (mass for mass).

### The problem

Current solutions, mentioned above, are more permeable to oxygen and water vapor, have a worse tensile and impact force, worse capacity to disperse heat and less adherence in contact, for example, with the ground, than the solution presented in this invention. In addition, many of them are subject to folding, or, to make them more efficient and safer for the described purpose, they are subjected to more complex processes and with greater cost, namely through the application of other plastics or aluminum layers.

Furthermore, current solutions use large amounts of polymers which are not always biodegradable and compostable under easy-to-access conditions and, therefore, pose a great threat to the environment.

### Benefits

### 1. Safety

The characteristics of graphene oxide and/or graphene, graphite or other graphene-based nanocomposites described above allow to obtain a final composite with greater strength, greater impermeability and better antibacterial performance, when used in food packaging.

Likewise, the use in carpets, tires, insulation and automobile parts also promotes safety there due to greater resistance of the part, greater impermeability to gases, greater adhesion, greater heat dispersion, helping to prevent accidents, in particular, but not exclusively, flaws in the parts themselves.

### 2. Economic advantages

This invention can be molded in various ways and used in various products such as those described above, allowing for greater performance when compared to others alike and at a lower production cost due to the use of a simpler and faster process (the use of graphene-based nanocomposites speeds up the extrusion process due to the fact that graphene is the best known thermal conductor).

In addition, the use of graphene-based nanocomposites allows the use of a greater amount of leather and paper, including industrial waste (for example, waste from the footwear industry, such as leather and rubber soles), which allows to reduce costs, since companies pay for the collection of such waste.

Furthermore, this process of adding and casting graphene-based nanocomposites with thermoplastic polymers and with leather and paper allows for greater control of the viscosity of the material achieved and, with that, a better material modulation to the desired final product, which is not possible through the techniques hitherto known.

The superior dimensional stability, structural homogeneity, with no leather or paper degradation and no formation of voids, pads or counterstains during this process, compared to those hitherto known, prevents greater waste, which results in economic advantages.

### 3. Advantages for the environment

Circular economy, one of the great ongoing European projects ("green deal"), is one of the great advantages extracted by this invention. This is because the footwear industry today has a large waste of leather, natural and synthetic, and vulcanized rubber and ethylene-vinyl acetate from both the outer covering, linings, tabs, reinforcements, heels, straps, soles and even laces, whose destination is usually landfill. In leather manufacture and processing, several highly harmful chemicals are used, often even the use of chromium in the leather bark, which is one of the most harmful forms of production. This waste, as I said, ends up in a landfill, with the inherent consequences for the environment and health.

With this invention, it is possible to reuse these residues and introduce them back into the economy, thus creating an incentive for industrial recycling of these products and their total reuse.

The present invention also allows to increase the use of paper and cellulose and to reduce the use of polymers which are not biodegradable and compostable, with the concomitant beneficial effect on the environment.

Furthermore, several studies have shown that graphene and graphene oxide are ecologically innocuous, cf. for example Salas, Sun, Lüttge & Tour, "Reduction of Graphene Oxide via Bacterial Respiration", American Society of Chemistry (2010).

### Industrial application

The process can be infinitely replicated as described above. Thus, it has an industrial application.

## Claims

1. Process for obtaining a leather, polymer and graphene-based nanocomposite compound, consisting of graphene **characterized by** comprising the following steps: adding between 0.25% to 10% (mass by mass) of graphene oxide (1), between 40% and 80% (mass by mass) of leather (2), 10% to 60% (mass by mass) of polymers (3) and between 0.01% to 45% (mass by mass) of calcium carbonate (4) by means of extrusion in an extruder(5) in which graphene oxide (1), polymers (3) and calcium carbonate (4) are melted and dispersed homogeneously in the leather (2).

2. Process for obtaining a leather, polymer and graphene-based nanocomposite compound, according to **Claim 1, characterized by** the fact that the formed nanocomposites can also be graphene, graphite or any other graphene-based nanocomposites in replacement of all or part of the graphene oxide (1).

3. Process for obtaining a leather, polymer and graphene-based nanocomposite compound, according to **Claims 1 and 2,** is **characterized by** the fact that paper, glass, glass wool or other form of cellulose between 5% and 75% (mass by mass) of leather can also be added (2).

4. Process for obtaining a leather, polymer and graphene-based nanocomposite compound, according to **Claims 1, 2 and 3, characterized by** the fact that vulcanized rubber can also be added to replace part of the leather (2).

5. Process for obtaining a leather, polymer and graphene-based nanocomposite compound, according to **Claims 1, 2, 3 and 4, characterized by** the fact that it can also be black carbon between 0.01% to 45% (mass by mass).

6. Process for obtaining a leather, polymer and graphene-based nanocomposite compound, according to **Claims 1, 2, 3, 4 and 5, characterized by** the fact that ethylene vinyl acetate between 0.01% and 99% (mass per mass) of leather can also be added(2).

7. Leather, polymer and graphene-based nanocomposite compound, produced according to the process claimed in **Claims 1, 2, 3, 4, 5 and 6.**
